# EUROPEAN PATENT APPLICATION

(11) **EP 3 832 449 A1**
(43) Date of publication of application: **09.06.2021**
(21) Application number: 18928720.4
(22) Date of filing: 01.08.2018
(51) Int. Cl.: G06F 3/044

(54) **TOUCH PANEL DETECTION METHOD AND TOUCH PANEL**

(71) Applicant: Shenzhen Royole Technologies Co., Ltd, Shenzhen, Guangdong 518172 (CN)
(72) Inventor: ZHU, Jianlei, Shenzhen, Guangdong 518172 (CN)
(74) Representative: Mewburn Ellis LLP
(86) International application number: PCT/CN2018/098138
(87) International publication number: WO 2020/024192

(57) **Abstract**

A detection method for a touch panel and a touch panel are provided. The detection method includes the following. Driving signals are provided to multiple touch driving electrodes (202) of a touch panel (101), and sensing signals are obtained from multiple touch sensing electrodes (203) of the touch panel (101). Target sensing signals from detection units corresponding to a preset touch sensing electrode (203) are detected, where the preset touch sensing electrode (203) is at least one of the multiple touch sensing electrodes (203). A determination result is obtained by determining the target sensing signals detected. A state of the touch panel (101) is determined according to the determination result, where the state of the touch panel (101) is a bending operation state or a touch operation state.

## Description

### TECHNICAL FIELD

This disclosure relates to the technical field of touch, and more particularly to a detection method for a touch panel and a touch panel.

### BACKGROUND

At present, bending of a screen is generally sensed by sensing components (such as an external mechanical sensor or optical sensor) disposed in an electronic device. For example, when the screen is bent to a certain extent, the bending of the screen is detected by mechanically triggering a button, or folding of the screen is sensed according to feeding moving distance. Alternatively, the bending of the screen can also be sensed through the optical sensor. However, according to the foregoing manners in which the bending of the screen is detected, a volume of the whole machine and the cost are increased. In addition, for flexible full screens, the sensing component can merely be placed inside the screen and cannot be placed outside the screen, which leads to a reduction in an inner space of the screen for arranging components, thereby increasing the complexity of design.

### SUMMARY

Implementations of the disclosure provide a detection method for a touch panel and a touch panel, which can identify whether the touch panel receives a touch operation or a bending operation by means of existing touch panels, such that the integration of the touch panel is improved and the complexity of the setting of components in the touch panel is reduced.

According to a first aspect, a detection method for a touch panel is provided. The method includes the following. Driving signals are provided to multiple touch driving electrodes of the touch panel, and sensing signals are obtained from multiple touch sensing electrodes of the touch panel, where the multiple touch driving electrodes and the multiple touch sensing electrodes form multiple detection units. Target sensing signals from detection units corresponding to a preset touch sensing electrode are detected, where the preset touch sensing electrode is at least one of the multiple touch sensing electrodes. A determination result is obtained by determining the target sensing signals detected. A state of the touch panel is determined according to the determination result, where the state of the touch panel is a bending operation state or a touch operation state.

According to a second aspect, a touch panel is provided. The touch panel includes a touch circuit, multiple touch driving electrodes, and multiple touch sensing electrodes configured to obtain sensing signals. The multiple touch driving electrodes and the multiple touch sensing electrodes form multiple detection units. The touch circuit is electrically coupled to the multiple touch driving electrodes and the multiple touch sensing electrodes. The touch circuit includes a diving unit, a sensing unit, a judging unit, and a determining unit. The diving unit is configured to provide driving signals to the multiple touch driving electrodes. The sensing unit is configured to obtain the sensing signals from the multiple touch sensing electrodes, where the sensing signals include target sensing signals obtained from a preset touch sensing electrode, and the preset touch sensing electrode is at least one of the multiple touch sensing electrodes. The judging unit is configured to obtain a determination result by determining the target sensing signals detected. The determining unit is configured to determine a state of the touch panel according to the determination result obtained by the judging unit, where the state of the touch panel is a bending operation state or a touch operation state.

According to the detection method for a touch panel, the target sensing signals obtained from the preset touch sensing electrode are detected and analyzed, to determine whether the touch panel receives a bending operation or a touch operation performed on a position of the touch panel corresponding to the preset touch sensing electrode. That is, the multiple touch driving electrodes and the multiple touch sensing electrodes can be multiplexed for recognizing bending operations received by the touch panel on the basis of recognizing touch operations, which effectively improves the integration of the touch panel and reduces the complexity of the setting of components in the touch panel.

### BRIEF DESCRIPTION OF THE DRAWINGS

To describe technical solutions in implementations of the disclosure or in the related art more clearly, the following briefly describes accompanying drawings required for illustrating the implementations. Apparently, the described accompanying drawings merely illustrate some implementations. Those of ordinary skill in the art may also obtain other accompanying drawings based on the accompanying drawings without creative efforts.
FIG. 1 is a schematic planar structural view of a touch panel according to implementations of the disclosure.
FIG. 2 is a schematic planar layout view of the touch panel illustrated in FIG. 1.
FIG. 3 is a cross-sectional view of the touch panel illustrated in FIG. 1.
FIG. 4 is a cross-sectional view of a touch driving electrode and a touch sensing electrode illustrated in FIG. 2 which are in an electrode layer in FIG. 3.
FIG. 5 is a schematic structural view illustrating the touch panel in FIG. 4 receiving a bending operation in a first direction or a bending operation in a second direction opposite the first direction.
FIG. 6 is a flow chart illustrating a detection method for a touch panel illustrated in FIG. 1 and FIG. 2.
FIG. 7 is a flow chart illustrating determining of a bending direction when it is determined that the touch panel receives a bending operation in FIG. 6.
FIG. 8 is a block diagram illustrating a touch circuit illustrated in FIG. 2.

### DETAILED DESCRIPTION

Hereinafter, technical solutions embodied in implementations of the disclosure will be described in a clear and comprehensive manner in conjunction with the accompanying drawings. It is obvious that implementations described herein are merely some implementations rather than all the implementations of the disclosure. All other implementations obtained by those of ordinary skill in the art based on the implementations of the disclosure without creative efforts shall fall within the protection scope of the disclosure.

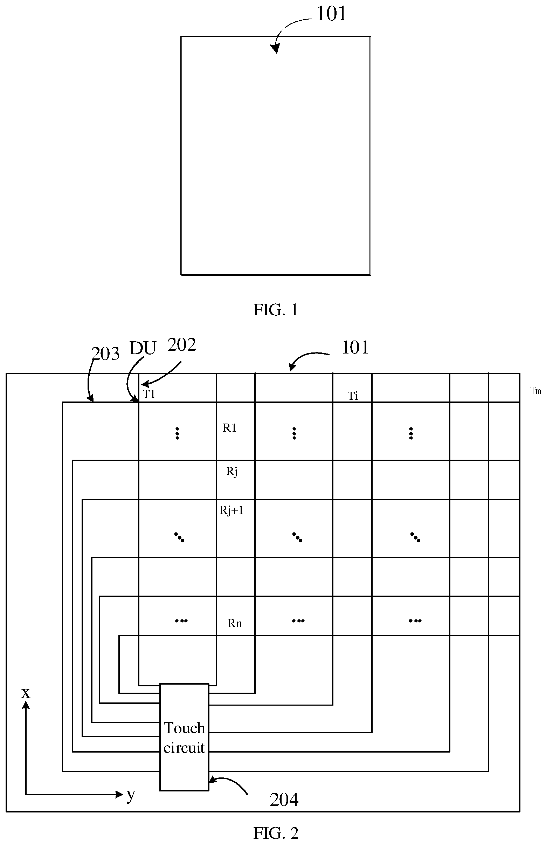

FIG. 1 is a schematic planar structural view of a touch panel according to implementations of the disclosure. As illustrated in FIG. 1, the touch panel 101 is a flexible panel. The touch panel 101 can be bent in response to a bending operation of a user, that is, the touch panel 101 can receive the bending operation of the user. The following describes a capacitive touch panel as an example of the touch panel 101. Alternatively, in other implementations of the disclosure, the touch panel 101 may be a resistive touch panel, a capacitive-sensing touch panel, an infrared touch panel, a surface-acoustic-wave touch panel, or the like. The disclosure is not limited thereto.

FIG. 2 is a schematic planar layout view of the touch panel 101 illustrated in FIG. 1. As illustrated in FIG. 2, the touch panel 101 includes multiple touch driving electrodes 202 which are insulated from each other. The multiple touch driving electrodes 202 extend along a driving direction x and are arranged along a sensing direction y. The multiple touch driving electrodes 202 are respectively expressed as *T1∼Ti∼Tm*, where 1≤*i*≤*m*, and *m* is a natural number.

In addition, the touch panel 101 further includes multiple touch sensing electrodes 203. The multiple touch sensing electrodes 203 extend along the sensing direction y and are arranged along the driving direction x. The multiple touch sensing electrodes 203 are respectively expressed as *R1∼Rj∼Rn,* where 1≤*j*≤*n*, and *n* is a natural number. The driving direction x and the sensing direction *y* are perpendicular to each other.

The multiple touch driving electrodes 202 intersect the multiple touch sensing electrodes 203. The multiple touch driving electrodes 202 and the multiple touch sensing electrodes 203 are insulated from each other and collectively form multiple detection units (DUs). It can be understood that each DU is a capacitor formed by the touch driving electrode 202 and an adjacent touch sensing electrode 203.

In implementations of the disclosure, the touch panel 101 further includes a touch circuit 204. The touch circuit 204 is electrically coupled to the multiple touch driving electrodes 202 and the multiple touch sensing electrodes 203. The touch circuit 204 is configured to apply driving signals to the multiple DUs through the multiple touch driving electrodes 202 and obtain sensing signals from the multiple touch sensing electrodes 203, so as to recognize a touch operation or a bending operation received by the touch panel 101.

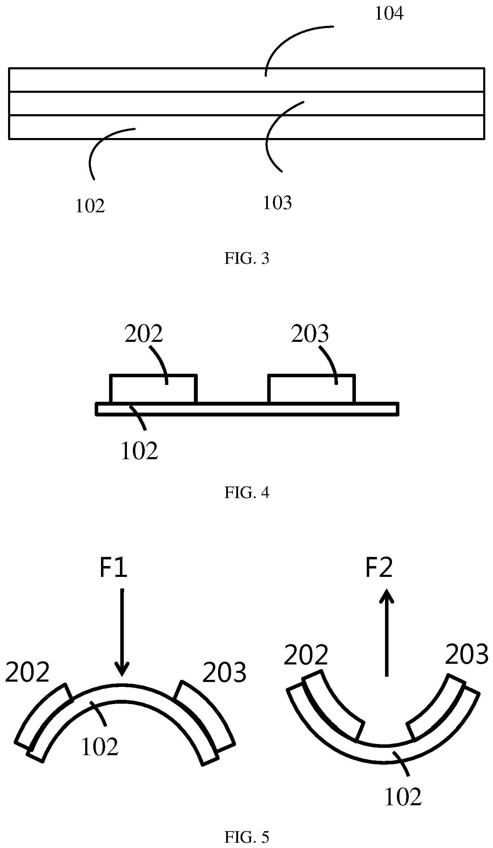

FIG. 3 is a cross-sectional view of the touch panel illustrated in FIG. 1. As illustrated in FIG. 3, the touch panel 101 includes multiple media layers, i.e., a substrate 102, an electrode layer 103, and a protective film 104 which are successively arranged from bottom to top. The substrate 102 is made from a transparent glass or resin material, and the electrode layer 103 is disposed on the substrate 102. The electrode layer 103 includes the multiple touch driving electrodes 202 and the multiple touch sensing electrodes 203. The protective film 104 is configured to protect the electrode layer 103.

FIG. 4 is a cross-sectional view of the DU in the electrode layer 103 in FIG. 3, where the DU is formed by the touch driving electrode 202 and an adjacent touch sensing electrode 203 illustrated in FIG. 2.

As illustrated in FIG. 4, the touch driving electrode 202 and the touch sensing electrode 203 are disposed on the substrate 102 at a predetermined distance and insulated from each other. When the touch panel 101 is powered on, the touch driving electrode 202 obtains the driving signal from the touch circuit 204, and the touch driving electrode 202 and the touch sensing electrode 203 in the DU in the form of a capacitor generate an electric field, such that the touch sensing electrode 203 can generate a corresponding sensing signal. In implementations of the disclosure, the sensing signal is indicative of a capacitance value of the DU.

When the touch panel 101 receives a touch operation, that is, when a finger of the user or a conductive object touches a surface of the protective film 104, the electric field of the capacitor formed by the touch driving electrode 202 and the touch sensing electrode 203 may be affected by the finger as a conductor, and accordingly the sensing signal generated by the touch sensing electrode 203 varies. A position of the touch operation can be identified by analyzing a position of the touch driving electrode 202 to which the driving signal corresponding to the varied sensing signal is applied and a position of the touch sensing electrode 203 that generates the varied sensing signal. It should be noted that the driving signals are sequentially applied to the multiple touch driving electrodes 202 in an arrangement order of the multiple touch driving electrodes 202, so that the position of the touch driving electrode 202 to which the driving signal is applied can be obtained according to a time point of applying the driving signal.

Furthermore, the touch panel 101 can also receive a bending operation. FIG. 5 is a schematic structural view illustrating the touch panel 101 in FIG. 4 receiving a bending operation in a first direction F1 or a bending operation in a second direction F2 opposite the first direction F1. In one example, the first direction F1 is a direction in which adjacent touch driving electrodes 202, adjacent touch sensing electrodes 203, or a touch driving electrode 202 and a touch sensing electrode 203 adjacent to the touch driving electrode 202 are enabled to be away from each other. The second direction F2 is a direction in which adjacent touch driving electrodes 202, adjacent touch sensing electrodes 203, or a touch driving electrode 202 and a touch sensing electrode 203 adjacent to the touch driving electrode 202 are enabled to approach each other.

As illustrated in FIG. 5, when the touch panel 101 is bent along the first direction F1 or the second direction F2 in response to the bending operation in the first direction F1 or in the second direction, a distance between the touch driving electrode 202 and the touch sensing electrode 203 changes, and accordingly the electric field of the capacitor formed by the touch driving electrode 202 and the touch sensing electrode 203 are affected, thereby causing changes in the sensing signal generated by the touch sensing electrode 203.

As one example, when the touch panel 101 is bent along the first direction F1 in response to the bending operation in the first direction F1, the distance between the touch driving electrode 202 and the touch sensing electrode 203 increases, and accordingly the electric field of the capacitor formed by the touch driving electrode 202 and the touch sensing electrode 203 decreases. As another example, when the touch panel 101 is bent along the second direction F2 in response to the bending operation in the second direction F2, the distance between the touch driving electrode 202 and the touch sensing electrode 203 decreases, and accordingly the electric field of the capacitor formed by the touch driving electrode 202 and the touch sensing electrode 203 increases. Compared with a case in which no bending operation is received, the decrease or increase of the electric field of the capacitor formed by the touch driving electrode 202 and the touch sensing electrode 203 leads to decrease or increase of the sensing signal. As such, the touch circuit 204 can accurately determine whether the touch panel 101 is bent at a preset specific position by analyzing a sensing signal from at least one preset touch sensing electrode 203 at the specific position. There may be one or more preset touch sensing electrodes 203 at the preset specific position, and the disclosure is not limited thereto. In implementations of the disclosure, two adjacent touch sensing electrodes (e.g., touch sensing electrodes *Rj* and *Rj*+1 illustrated in FIG. 2) are disposed at the preset specific position. It can be understood that generally the preset specific position is bent when the bending operation is performed.

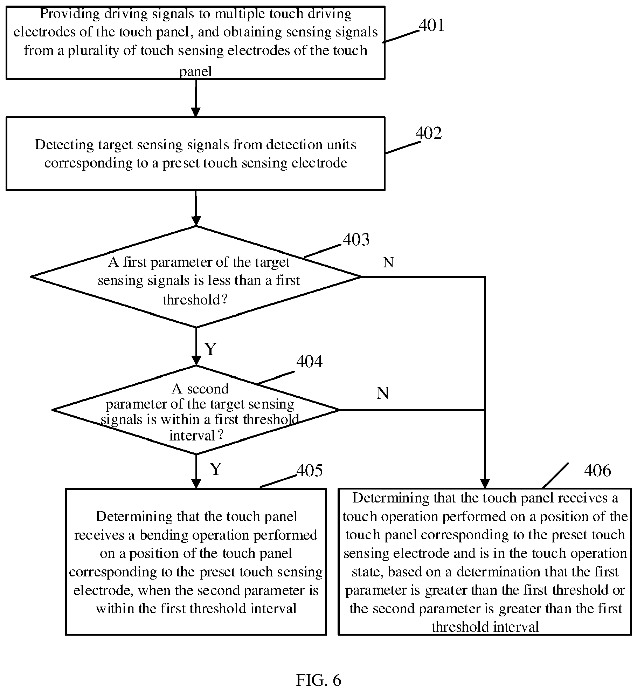

FIG. 6 is a flow chart illustrating a detection method for a touch panel illustrated in FIG. 1 and FIG. 2. As illustrated in FIG. 6, the method begins at block 401.

At block 401, driving signals are provided to the multiple touch driving electrodes 202 of the touch panel 101, and sensing signals are obtained from the multiple touch sensing electrodes 203 of the touch panel 101.

In one example, the driving signals are respectively applied to corresponding DUs according to an arrangement order of the touch driving electrodes *T1* to *Tm* illustrated in FIG. 2 and a preset time interval, and the sensing signals are obtained from the multiple touch sensing electrodes 203 corresponding to the multiple DUs, such that the touch panel 101 can sense a received touch operation or bending operation.

At block 402, target sensing signals from DUs corresponding to the preset touch sensing electrode 203 are detected. The preset touch sensing electrode 203 at the preset specific position is at least one of the multiple touch sensing electrodes 203. For example, the at least one preset touch sensing electrode 203 at the specific position is the touch sensing electrodes R*j* and R(*j*+1).

In one example, when a touch operation or bending operation is performed on the touch panel 101, signals from the multiple DUs formed by the multiple touch driving electrodes 202 and the multiple touch sensing electrodes 203 correspondingly change, and target sensing signals can be obtained from multiple DUs corresponding to the touch sensing electrodes R*j* and R(*j*+1).

The target sensing signals include sub-target sensing signals from the multiple DUs corresponding to the touch sensing electrodes R*j* and R(*j*+1). The sub-target sensing signals can be expressed as number sequence A[*j*,*m*] and A[*j*+1,*m*]. The number sequence A[*j*,*m*] represents sensing signals from *m* DUs corresponding to the touch sensing electrode R*j*. The number sequence A[*j*+1,*m*] represents sensing signals from *m* DUs corresponding to the touch sensing electrode R(*j*+1). To reduce the complexity of processing the sensing signal, the sensing signal may be data obtained by performing differential processing on the sensing signal and an initial value.

For example, the touch panel 101 includes 15 touch driving electrodes, 10 touch sensing electrodes, and the touch circuit, i.e., *m*=15 and *n*=10.

As one example, when the touch panel 101 receives no touch operation or no bending operation, a data matrix including 15^{∗}10 initial values generated by the 15 touch driving electrodes 202 and the 10 touch sensing electrodes 203 is illustrated in Table 1. That is, Table 1 illustrates a matrix of sensing signals generated by touch driving electrodes T1 to Tm and touch sensing electrodes R1 to Rn of the touch panel 101.

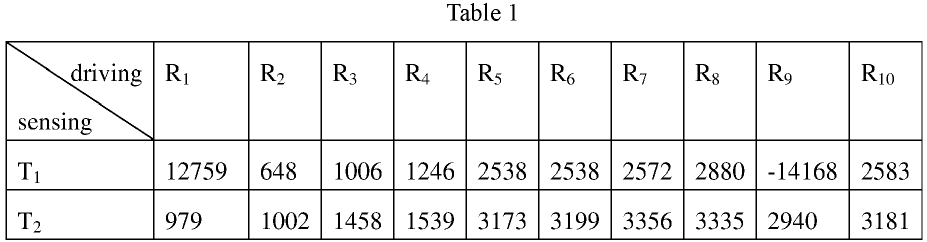

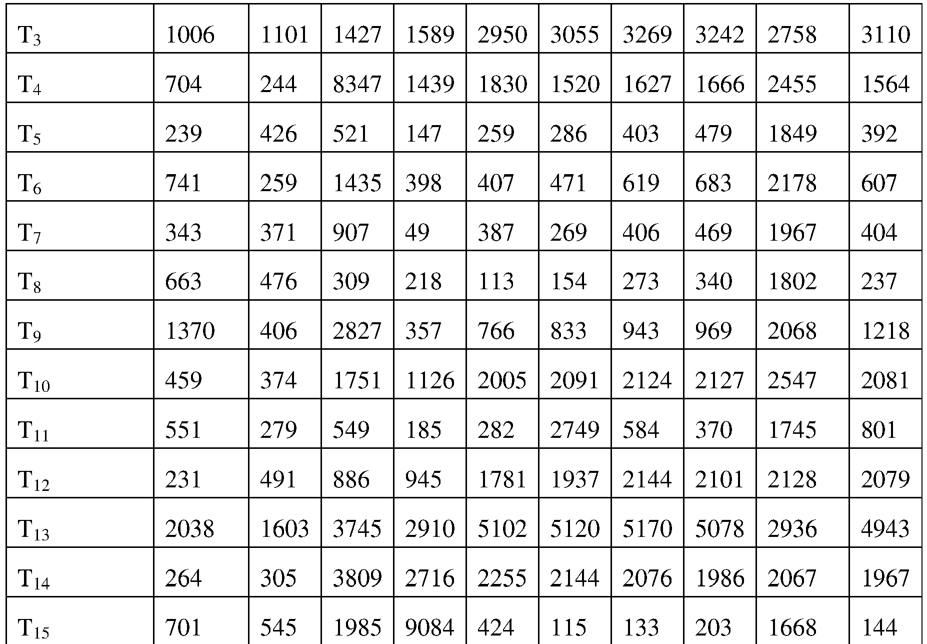

As another example, when the touch panel 101 receives a touch operation or a bending operation, to facilitate data processing, a corresponding initial value is subtracted from each sensing signal to obtain a data matrix illustrated in Table 2. Taking a capacitance value (in the first row and first column in Table 1) of the DU formed by the touch driving electrode T1 and the touch sensing electrode R1 as an example, an initial capacitance value of the DU is "12759". When the touch panel 101 receives a touch operation or a bending operation, the initial capacitance value is subtracted from a sensing signal from the touch sensing electrode R1 (the touch sensing electrode R1 and the touch driving electrode T1 forms the DU), to obtain a difference value of "-2", such that the complexity of processing the sensing signal can be effectively reduced.

**Table 2**

| | R₁ | R₂ | R₃ | R₄ | R₅ | R₆ | R₇ | R₈ | R₉ | R₁₀ |
|---|---|---|---|---|---|---|---|---|---|---|
| T₁ | -2 | -6 | -3 | 5 | 2 | -2 | -2 | -2 | -2 | -5 |
| T₂ | -2 | 2 | -3 | 4 | 1 | 0 | -2 | 2 | -2 | -1 |
| T₃ | -1 | -1 | 1 | -1 | -2 | -4 | -9 | 2 | 0 | 5 |
| T₄ | 2 | 8 | 2 | 6 | 3 | 5 | 18 | 7 | -2 | 5 |
| T₅ | 1 | -2 | 0 | -4 | -1 | 10 | 23 | 15 | -3 | 5 |
| T₆ | -1 | 6 | 0 | -1 | 2 | 7 | 16 | 2 | 0 | 2 |
| T₇ | 0 | 3 | 0 | -4 | 1 | 2 | 7 | 3 | 0 | 3 |
| T₈ | -8 | 3 | -3 | -1 | -2 | 2 | 15 | 5 | 4 | 4 |
| T₉ | 0 | 3 | 3 | 4 | 0 | -4 | 0 | -2 | 5 | -2 |
| T₁₀ | 1 | 3 | -2 | 5 | 0 | 3 | 2 | 5 | -2 | 2 |
| T₁₁ | 1 | 1 | 0 | 1 | 4 | 1 | 4 | 2 | 8 | 1 |
| T₁₂ | -4 | 1 | -1 | 4 | 4 | 0 | 1 | 4 | 8 | 0 |
| T₁₃ | 1 | 2 | 0 | 3 | 3 | 1 | 5 | 2 | -6 | -1 |
| T₁₄ | -3 | 0 | 0 | 6 | 0 | 7 | -2 | -5 | 0 | -4 |
| T₁₅ | -5 | 1 | 3 | 3 | -3 | 0 | -1 | 4 | 8 | 4 |

In one example, the target sensing signals correspond to a first parameter and a second parameter. The first parameter is a variance of the sub-target sensing signals, that is, a variance of the sub-target sensing signals expressed as the number sequence A[*j*,*m*] and A[*j*+1,*m*]. It can be understood that the first parameter is indicative of an average change degree of sensing signals from the multiple DUs corresponding to the preset touch sensing electrodes R*j* and R(*j*+1).

The second parameter is an absolute value (|*A*-*B*|) of a difference between a first reference value *A* and a second reference value *B.* The second parameter is indicative of a difference between the sensing signals generated by the preset touch sensing electrodes R*j* and R(*j*+1), and sensing signals generated by touch sensing electrodes R1 to R(*j*-1) and R(*j*+2) to R*n* other than the preset touch sensing electrodes R*j* and R(*j*+1) among the multiple touch sensing electrodes R1 to R*n*.

The first reference value A is an average value of the sub-target sensing signals, i.e., an average value of the sub-target sensing signals represented as the number sequence s A[*j*,*m*] and A[*j*+1,*m*].

The second reference value B is an average value of the sensing signals generated by DUs corresponding to the touch sensing electrodes R1 to R(*j*-1) and R(*j*+2) to R*n* other than the preset touch sensing electrodes R*j* and R(*j*+1) among the multiple touch sensing electrodes R1 to R*n*, i.e., an average value of number sequence A[1,*m*] to A[*j*-1,*m*] and number sequence A[*j*+2,*m*] to *A*[*n*,*m*].

At block 403, a determination result is obtained by determining the target sensing signals detected. That is, determine whether the first parameter of the target sensing signals is less than a first threshold Rth.

In one example, the first threshold Rth is indicative of the average change degree of the sensing signals from the multiple DUs corresponding to the preset touch sensing electrodes. The first threshold Rth is determined according to experience or experiment.

At block 404, a state of the touch panel is determined according to the determination result, where the state of the touch panel is a bending operation state or a touch operation state.

In one example, the state of the touch panel is determined as follows. When the first parameter is less than the first threshold Rth, the method proceeds to determining whether the second parameter of the target sensing signals is within a first threshold interval. The first threshold interval can be expressed as [Tth1, Tth2].

The first threshold interval [Tth1, Tth2] is an interval range formed by a third reference value Tth1 and a fourth reference value Tth2. The first threshold interval is indicative of the difference between the sensing signals generated by the preset touch sensing electrodes R*j* and R(*j*+1), and the sensing signals generated by the touch sensing electrodes R1 to R(*j*-1) and R(*j*+2) to R*n* other than the preset touch sensing electrodes R*j* and R(*j*+1) among the multiple touch sensing electrodes R1 to R*n*. In one example, the first threshold interval [Tth1, Tth2] is determined according to experience or experiment.

In at least one implementation, when the first parameter is not less than the first threshold Rth, it is determined that the touch panel 101 receives a single-touch operation performed on a position of the touch panel corresponding to the preset touch sensing electrodes R*j* and R(*j*+1). In one example, the single-touch operation is a long-press point-touch operation performed on a position of the touch panel 101.

In at least one implementation, determining that the touch panel receives the single-touch operation further includes the following.

Determine whether the target sensing signals satisfy a point-reporting scheme, where the point-reporting scheme is used for determining a touch position of the touch operation.

The touch position of the touch operation is reported when the target sensing signals satisfy the point-reporting scheme of the touch panel 101. That is, report which DU among the multiple DUs corresponding to the preset touch sensing electrodes R*j* and R*j*+1 outputs a changed sensing signal, so as to determine a position of the DU from which the changed sensing signal is outputted.

At block 405, when the second parameter is within the first threshold interval [Tth1, Tth2], it is determined that the touch panel 101 receives a bending operation performed on the position of the touch panel corresponding to the preset touch sensing electrodes R*j* and R*j*+1 and is in the bending operation state.

The second parameter being within the first threshold interval [Tth1, Tth2] refers to that the second parameter is greater than the third reference value Tth1 and less than the fourth reference value Tth2. When the second parameter is within the first threshold interval [Tth1, Tth2], it can be determined that the touch panel 101 receives the bending operation performed on the position of the touch panel corresponding to the preset touch sensing electrodes R*j* and R*j*+1.

In at least one implementation, when the second parameter is within the first threshold interval [Tth1, Tth2], it is further determined a bending direction of the touch panel 101, that is, whether the bending direction of the touch panel 101 is a first direction F1 or a second direction F2.

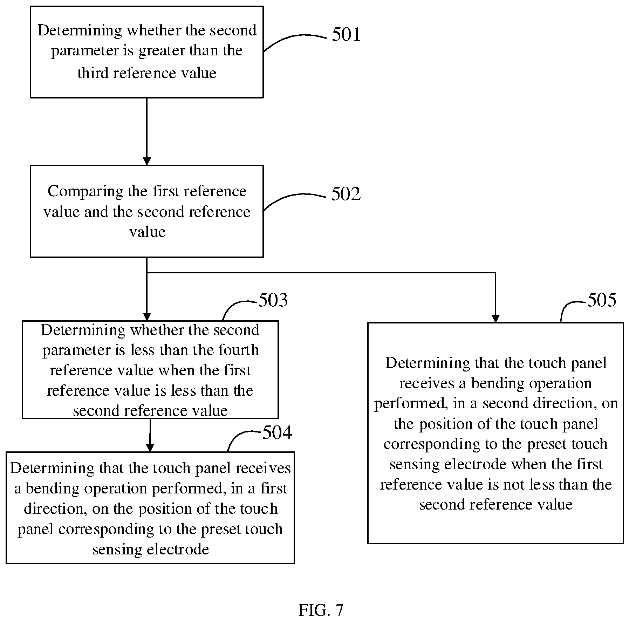

FIG. 7 is a flow chart illustrating determining of a bending direction when it is determined that the touch panel 101 receives a bending operation. As illustrated in FIG. 7, it is determined the bending direction of the touch panel 101 as follows when the second parameter is within the first threshold interval [Tth1, Tth2].

At block 501, determine whether the second parameter is greater than the third reference value Tth1.

At block 502, when the second parameter is greater than the third reference value Tth1, compare the first reference value *A* with the second reference value *B.*

At block 503, when the first reference value A is less than the second reference value B, determine whether the second parameter is less than the fourth reference value Tth2.

At block 504, when the second parameter is less than the fourth reference value Tth2, determine that the touch panel 101 receives a bending operation performed, in the first direction F1 illustrated in FIG. 5, on the position of the touch panel corresponding to the preset touch sensing electrodes R*j* and R*j*+1.

Contrary to operations at block 503, at block 505, when the first reference value A is not less than the second reference value B, determine that the touch panel 101 receives a bending operation performed, in the second direction F2 illustrated in FIG. 5, on the position of the touch panel corresponding to the preset touch sensing electrodes R*j* and R*j*+1. In this case, the second parameter is also less than the fourth reference value Th2, to ensure that the second parameter is within the first threshold interval [Tth1, Tth2].

Referring back to FIG. 6, at block 406, when the second parameter is greater than the first threshold interval [Tth1, Tth2], determine that the touch panel 101 receives a multi-touch gesture operation performed on positions of the touch panel corresponding to the preset touch sensing electrodes R*j* and R*j*+1. In one example, the multi-touch gesture operation may include a zoom-in or zoom-out operation, and a rotation operation, etc. performed on the touch panel 101, that is, a continuous multi-touch gesture operation.

For the multi-touch gesture operation, it can further determine whether the target sensing signals satisfy the point-reporting scheme for the touch panel 101. When the target sensing signals satisfy the point-reporting scheme, touch positions of the multi-touch gesture operation are reported.

It can be understood that the second parameter being greater than the first threshold interval [Tth1, Tth2] refers to that the second parameter is greater than the fourth reference value Tth2, that is, the second parameter is greater than any value in the first threshold interval [Tth1, Tth2].

It needs to be noted that the single-touch operation received by the touch panel 101 when the first parameter is not less than the first threshold Rth, and the multi-touch gesture operation determined when the second parameter is greater than the first threshold interval [Tth1, Tth2] are both a touch operation. When the touch panel 101 receives the touch operation, it means that the touch panel 101 is in a touch operation state.

In one example, when the first parameter is less than the first threshold Rth, and the second parameter is less than the first threshold interval [Tth1, Tth2] (that is, the second parameter is less than the third reference value Tth1), it is determined that no bending operation or no touch operation is performed on a position of the touch panel corresponding to the preset touch sensing electrodes R*j* and R*j*+1.

According to implementations provided herein, the target sensing signals corresponding to the preset touch sensing electrodes R*j* and R*j*+1 can be detected. Determine whether the touch panel 101 receives the bending operation or the touch operation performed on the position(s) of the touch panel corresponding to the preset touch sensing electrodes according to a relationship between the first parameter of the target sensing signals and the first threshold Rth, and a relationship between the second parameter and the first threshold interval [Tth1, Tth2]. In this way, on the basis of recognizing the touch operation by multiplexing existing touch electrodes and the touch circuit of the touch panel 101, the bending operation can also be recognized with aid of the configured scheme, which can improve the integration of the touch panel 101 and reduce the spatial layout complexity of components in the touch panel 101.

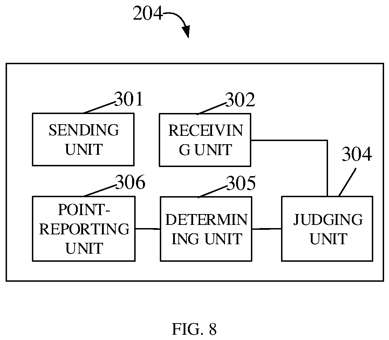

FIG. 8 is a block diagram illustrating the touch circuit 204 illustrated in FIG. 2. The touch circuit 204 is configured to perform a detection of a touch operation or a bending operation performed on the touch panel 101 as illustrated in FIG. 6 and FIG. 7.

In at least one implementation, the touch circuit 204 includes a diving unit 301, a sensing unit 302, a judging unit 304, a determining unit 305, and a point-reporting unit 306.

The diving unit 301 is configured to apply driving signals to the multiple touch driving electrodes 202.

The sensing unit 302 is configured to obtain sensing signals from the multiple touch sensing electrodes 203, where the sensing signals include target sensing signals obtained from the preset touch sensing electrodes R*j∼*R*j*+1.

The judging unit 304 is configured to obtain a determination result by determining the target sensing signals. In one example, the judging unit 304 is configured to determine whether a first parameter of the target sensing signals is less than a first threshold Rth, and determine a relationship between a second parameter of the target sensing signals and a first threshold interval [Tth1,Tth2]. That is, the judging unit 304 is configured to determine whether the second parameter of the target sensing signals is within the first threshold interval [Tth1,Tth2], greater than the first threshold interval [Tth1,Tth2], or less than the first threshold interval [Tth1,Tth2],

In at least one implementation, in terms of determining whether the first parameter is less than the first threshold Rth and determining the relationship between the second parameter and the first threshold interval [Tth1,Tth2], the judging unit 304 is sequentially configured to: determine whether the first parameter is less than the first threshold Rth, and determine the relationship between the second parameter and the first threshold interval [Tth1,Tth2] when the first parameter is less than the first threshold Rth. If the first parameter is not less than the first threshold Rth, the judging unit 304 can directly send a determination result (i.e., the first parameter is not less than the first threshold Rth) to the determining unit 305.

Thereafter, the judging unit 304 sends to the determining unit 305 a determination result (the second parameter is within the first threshold interval [Tth1,Tth2], greater than the first threshold interval [Tth1,Tth2], or less than the first threshold interval [Tth1,Tth2]). In one example, if the second parameter is less than the third reference value Tth1, it indicates that the second parameter is less than the first threshold interval [Tth1, Tth2]. Alternatively, if the second parameter is greater than the fourth reference value Tth2, it indicates that the second parameter is greater than the first threshold interval [Tth1, Tth2]. Alternatively, if the second parameter is greater than the third reference value Tth1 and less than the fourth reference value Tth2, it indicates that the second parameter is within the first threshold interval [Tth1,Tth2].

The judging unit 304 is configured to compare a first reference value A with a second reference value B in the first parameter when the second parameter is within the first threshold interval [Tth1,Tth2]. In one example, the judging unit 304 is configured to: determine whether the second parameter is greater than the third reference value Tth1, compare the first reference value *A* with the second reference value *B* based on a judgment that the second parameter is greater than the third reference value Tth1; and determine whether the second parameter is less than the fourth reference value Tth2 when the first reference value A is less than the second reference value *B.* Alternatively, if the first reference value A is greater than the second reference value *B,* the judging unit 304 can directly send a determination result (the first reference value *A* is greater than the second reference value B) to the determining unit 305.

If the second parameter is greater than the third reference value Tth1 and less than the fourth reference value Tth2, it indicates that the second parameter is within the first threshold interval [Tth1,Tth2], When the second parameter is within the first threshold interval [Tth1,Tth2], the judging unit 304 can send the determination result of the first reference value and the second reference value to the determining unit 305.

The determining unit 305 is configured to determine a state of the touch panel according to the determination result obtained by the judging unit 304.

In at least one implementation, when the first parameter is greater than the first threshold Rth, the determining unit 305 determines that the touch panel receives a single-touch operation performed on a position of the touch panel corresponding to the preset touch sensing electrodes R*j* and R*j*+1. Furthermore, when the target sensing signals satisfy a point-reporting scheme for the touch panel, the point-reporting unit 306 reports a touch position of the single-touch operation.

In at least one implementation, when the first parameter is less than the first threshold Rth and the second parameter is within the first threshold interval [Tth1,Tth2], the determining unit 305 determines that the touch panel receives a bending operation performed on a position of the touch panel corresponding to the preset touch sensing electrodes R*j* and R*j*+1.

In one example, when the first parameter is less than the first threshold Rth, the second parameter is within the first threshold interval [Tth1,Tth2], and the first reference value A is less than the second reference value B, the determining unit 305 determines that the touch panel 101 receives a bending operation performed, in a first direction F1, on a position of the touch panel corresponding to the preset touch sensing electrodes R*j* and R*j*+1. Alternatively, when the first reference value *A* is not less than the second reference value *B,* the determining unit 305 determines that the touch panel 101 receives a bending operation performed, in a second direction F2, on a position of the touch panel corresponding to the preset touch sensing electrodes R*j* and R*j*+1.

When the first parameter is less than the first threshold Rth and the second parameter is greater than the first threshold interval [Tth1,Tth2], the determining unit 305 determines that the touch panel 101 receives a multi-touch gesture operation performed on a position of the touch panel corresponding to the preset touch sensing electrodes R*j* and R*j*+1. In addition, if the target sensing signals satisfy the point-reporting scheme for the touch panel, the point-reporting unit 306 reports touch positions of the multi-touch gesture operation.

It can be understood that when the first parameter is less than the first threshold Rth and the second parameter is less than the first threshold interval [Tth1,Tth2], the determining unit 305 determines that the touch panel 101 receives no bending operation or no touch operation performed on a position of the touch panel corresponding to the preset touch sensing electrodes R*j* and R*j*+1.

According to the implementations provided herein, the sensing unit 302 in the touch circuit detects the target sensing signals from the preset touch sensing electrodes 203, and the judging unit 304 determines the relationship between the first parameter of the target sensing signals and the first threshold, and the relationship between the second parameter of the target sensing signals and the first threshold interval. Thereafter, the determining unit 305 determines whether the operation (performed on the position(s) of the touch panel corresponding to the preset touch sensing electrodes) received by the touch panel is a bending operation or a touch operation according to the determination result. In this way, on the basis of recognizing the touch operation by multiplexing touch electrodes and the touch circuit of the touch panel 101, the bending operation can also be recognized, which can improve the integration of the touch panel 101 and reduce the spatial layout complexity of components of the touch panel 101.

The foregoing merely illustrates some implementations of the disclosure. It can be understood that the foregoing implementations are not intended to limit the scope of the disclosure. Therefore, the equivalent changes made according to the claims of the disclosure still belong to the scope of the disclosure.

## Claims

1. A detection method for a touch panel, comprising:
providing driving signals to a plurality of touch driving electrodes of the touch panel, and obtaining sensing signals from a plurality of touch sensing electrodes of the touch panel, wherein the plurality of touch driving electrodes and the plurality of touch sensing electrodes form a plurality of detection units;
detecting target sensing signals from detection units corresponding to a preset touch sensing electrode, wherein the preset touch sensing electrode is at least one of the plurality of touch sensing electrodes;
obtaining a determination result by determining the target sensing signals detected; and
determining a state of the touch panel according to the determination result, wherein the state of the touch panel comprises a bending operation state and a touch operation state.

2. The detection method of claim 1, wherein obtaining the determination result by determining the target sensing signals detected and determining the state of the touch panel according to the judgment result comprise:
determining whether a first parameter of the target sensing signals is less than a first threshold, wherein the first threshold is indicative of an average change degree of sensing signals from the detection units corresponding to the preset touch sensing electrode;
determining whether a second parameter of the target sensing signals is within a first threshold interval based on a determination that the first parameter is less than the first threshold, wherein the first threshold interval is indicative of a difference between the sensing signals generated by the preset touch sensing electrode and sensing signals generated by touch sensing electrodes other than the preset touch sensing electrode among the plurality of touch sensing electrodes;
determining that the touch panel receives a bending operation performed on a position of the touch panel corresponding to the preset touch sensing electrode and is in the bending operation state, based on a determination that the second parameter is within the first threshold interval; and
determining that the touch panel receives a touch operation performed on a position of the touch panel corresponding to the preset touch sensing electrode and is in the touch operation state, based on a determination that the first parameter is greater than the first threshold or the second parameter is greater than the first threshold interval.

3. The detection method of claim 2, wherein the second parameter is an absolute value of a difference between a first reference value and a second reference value, wherein the target sensing signals comprise sub-target sensing signals from the detection units corresponding to the preset touch sensing electrode, wherein
the first reference value is an average value of the sub-target sensing signals;
the second reference value is an average value of the sensing signals generated by detection units corresponding to the touch sensing electrodes other than the preset touch sensing electrode among the plurality of touch sensing electrodes; and
the first threshold interval is an interval range formed by a third reference value and a fourth reference value.

4. The detection method of claim 3, wherein "determining that the touch panel receives the bending operation performed on the position of the touch panel corresponding to the preset touch sensing electrode, based on a determination that the second parameter is within the first threshold interval" comprises:
determining whether the second parameter is greater than the third reference value;
comparing the first reference value with the second reference value based on a determination that the second parameter is greater than the third reference value;
determining whether the second parameter is less than the fourth reference value when the first reference value is less than the second reference value; and
determining that the touch panel receives a bending operation performed, in a first direction, on the position of the touch panel corresponding to the preset touch sensing electrode based on a determination that the second parameter is less than the fourth reference value, wherein the first direction is a direction in which adjacent preset touch sensing electrodes are enabled to be away from each other.

5. The detection method of claim 4, further comprising:
determining that the touch panel receives a bending operation performed, in a second direction, on the position of the touch panel corresponding to the preset touch sensing electrode when the first reference value is not less than the second reference value, wherein the first direction is opposite to the second direction, and the second direction is a direction in which adjacent preset touch sensing electrodes are enabled to approach each other.

6. The detection method of claim 3, wherein "determining that the touch panel receives the touch operation performed on the position of the touch panel corresponding to the preset touch sensing electrode, based on a determination that the first parameter is greater than the first threshold or the second parameter is greater than the first threshold interval" comprises:
determining that the touch panel receives a single-touch operation performed on the position of the touch panel corresponding to the preset touch sensing electrode, based on a determination that the first parameter is greater than the first threshold; or
determining that the touch panel receives a multi-touch gesture operation performed on the position of the touch panel corresponding to the preset touch sensing electrode, based on a determination that the first parameter is less than the first threshold and the second parameter is greater than the fourth reference value.

7. The detection method of claim 6, further comprising:
after determining that the touch panel receives the single-touch operation performed on the position of the touch panel corresponding to the preset touch sensing electrode,
determining whether the target sensing signals satisfy a point-reporting scheme for the touch panel, wherein the point-reporting scheme is used for determining a touch position of the single-touch operation or touch positions of the multi-touch gesture operation; and
reporting the touch position of the single-touch operation or the touch positions of the multi-touch gesture operation based on a determination that the target sensing signals satisfy the point-reporting scheme.

8. The detection method of claim 3, further comprising:
determining that the touch panel receives no bending operation or no touch operation performed on a position of the touch panel corresponding to the preset touch sensing electrode, based on a determination that the first parameter is less than the first threshold and the second parameter is less than the third reference value.

9. The detection method of any of claims 2 to 8, wherein the first parameter is a variance of sub-target sensing signals corresponding to the preset touch sensing electrode.

10. A touch panel comprising:
a plurality of touch driving electrodes;
a plurality of touch sensing electrodes configured to obtain sensing signals, wherein the plurality of touch driving electrodes and the plurality of touch sensing electrodes form a plurality of detection units; and
a touch circuit electrically coupled to the plurality of touch driving electrodes and the plurality of touch sensing electrodes, the touch circuit comprising:
a diving unit configured to provide driving signals to the plurality of touch driving electrodes;
a sensing unit configured to obtain the sensing signals from the plurality of touch sensing electrodes, wherein the sensing signals comprise target sensing signals obtained from a preset touch sensing electrode, wherein the preset touch sensing electrode is at least one of the plurality of touch sensing electrodes;
a judging unit configured to obtain a determination result by determining the target sensing signals detected; and
a determining unit configured to determine a state of the touch panel according to the determination result, wherein the state of the touch panel comprises a bending operation state and a touch operation state.

11. The touch panel of claim 10, wherein
the judging unit configured to obtain the determination result by determining the target sensing signals detected is configured to:
determine whether a first parameter of the target sensing signals is less than a first threshold, wherein the first threshold is indicative of an average change degree of sensing signals from detection units corresponding to the preset touch sensing electrode; and
determine whether a second parameter of the target sensing signals is within a first threshold interval based on a determination that the first parameter is less than the first threshold, wherein the first threshold interval is indicative of a difference between the sensing signals generated by the preset touch sensing electrode and sensing signals generated by touch sensing electrodes other than the preset touch sensing electrode among the plurality of touch sensing electrodes; and
the determining unit configured to determine the state of the touch panel is configured to:
determine that the touch panel receives a bending operation performed on a position of the touch panel corresponding to the preset touch sensing electrode, when the second parameter is within the first threshold interval; or
determine that the touch panel receives a touch operation performed on a position of the touch panel corresponding to the preset touch sensing electrode, when the first parameter is greater than the first threshold or the second parameter is greater than the first threshold interval.

12. The touch panel of claim 11, wherein the second parameter is an absolute value of a difference between a first reference value and a second reference value, wherein the target sensing signals comprise sub-target sensing signals from the detection units corresponding to the preset touch sensing electrode, wherein the first reference value is an average value of the sub-target sensing signals, and the second reference value is an average value of the sensing signals generated by detection units corresponding to the touch sensing electrodes other than the preset touch sensing electrode among the plurality of touch sensing electrodes, wherein the first threshold interval is an interval range formed by a third reference value and a fourth reference value; wherein
the judging unit in the touch circuit configured to compare the first reference value with the second reference value when the second parameter is within the first threshold interval is configured to:
determine whether the second parameter is greater than the third reference value;
compare the first reference value with the second reference value based on a judgment that the second parameter is greater than the third reference value; and
determine whether the second parameter is within the first threshold interval when the first reference value is less than the second reference value; and
the determining unit is configured to:
determine that the touch panel receives a bending operation performed, in a first direction, on a position of the touch panel corresponding to the preset touch sensing electrode when the second parameter is less than the fourth reference value, which indicates that the second parameter is within the first threshold interval, wherein the first direction is a direction in which adjacent preset touch sensing electrodes are enabled to be away from each other; or
determine that the touch panel receives a bending operation performed, in a second direction, on the position of the touch panel corresponding to the preset touch sensing electrode when the first reference value is not less than the second reference value, wherein the first direction is opposite to the second direction, and the second direction is a direction in which adjacent preset touch sensing electrodes are enabled to approach each other.

13. The touch panel of claim 12, wherein the determining unit configured to determine that the touch panel receives the touch operation performed on the position of the touch panel corresponding to the preset touch sensing electrode, when the first parameter is greater than the first threshold or the second parameter is greater than the first threshold interval is configured to:
determine that the touch panel receives a single-touch operation performed on the position of the touch panel corresponding to the preset touch sensing electrode, when the first parameter is greater than the first threshold; or
determine that the touch panel receives a multi-touch gesture operation performed on the position of the touch panel corresponding to the preset touch sensing electrode, when the first parameter is less than the first threshold and the second parameter is greater than the fourth reference value.

14. The touch panel of claim 12, further comprising:
determining the touch panel receives no bending operation or no touch operation performed on a position of the touch panel corresponding to the preset touch sensing electrode when the first parameter is less than the first threshold and the second parameter is less than the third reference value.

15. The touch panel of any of claims 12 to 14, wherein the first parameter is a variance of the sub-target sensing signals corresponding to the preset touch sensing electrode.
